Europäisches Patentamt

European Patent Office

Office européen des brevets

(19)

(11) Publication number: **0 402 809**
**A2**

(12) # EUROPEAN PATENT APPLICATION

(21) Application number: 90110948.8

(22) Date of filing: 09.06.90

(51) Int. Cl.⁵: **H04N 7/173, H04N 9/00**

(30) Priority: 13.06.89 US 368951
07.08.89 US 390073

(43) Date of publication of application:
**19.12.90 Bulletin 90/51**

(84) Designated Contracting States:
**AT BE CH DE DK ES FR GB GR IT LI NL SE**

(71) Applicant: **Magus, Ltd.**
**Cayman Corporation Services Elizabethan**
**Square 4th Floor**
**Georg Town Grand Cayman(KY)**

(72) Inventor: **Garza, Fernando Morales**
**2231 Wake Robin Lane**
**Reston, Virginia 22091(US)**

(74) Representative: **Scheidegger, Werner & Co.**
**Stampfenbachstrasse 48 Postfach**
**CH-8023 Zürich(CH)**

(54) Satellite television communication system for audience polling and processing answers.

(57) A network of local area audience response stations is coupled together with a central audience response data processing center by means of a satellite communication system for real time single or bi-directional audience response analysis, locally, nationally or internationally. Each local area station and each response unit may be identified and verified by allocation of specific time slots for response, preferable synchronously related to a TV picture program transmission carrying the audience questions to be answered. Wireless transmission of the question and answer signals in digital format of beeps of a single frequency keep transmission channels narrow. The system may be operated in conjunction with TV broadcasting or cable systems in which the transmission time of the beep transmissions are compensated for so that millions of subscribers may be processed in a simple narrow band communication system for processing over a single satellite communication channel

EP 0 402 809 A2

**Satellite Television Communication System for audience polling and processing answers**

This invention relates to two way audience polling communications between different audience response units such as TV receiver stations, and more particularly it relates to a communication system permitting questions to be sent to and answers to be received from individual response stations by way of satellite communication for processing at remotely located central processing locations.

Among prior art polling, voting and two-way communication systems is that of U.S. Patent 4,591,906 to Fernando Morales-Garza, et al., May 27, 1986, which disclosure is incorporated herein in entirety to simplify the scope of the present disclosure while enabling those in the art to practice this invention, and to better clarify the nature and scope of the present invention. That system permits answers to be sent by single frequency beeps from TV receiver audience response stations to a central processing station, at a TV transmitter studio site for example. Specific response time slots identify the answering units and compensation is made for travel time of the radio signals along the travel path.

Also known in the art are various local remote control units for operational control of TV receivers by infrared (IR) wireless systems. One such system is that of co-pending application S.N. 07/368,951 filed June 13, 1989 by Fernando Morales, et al. for Wireless Remote Control of Cursor Superimposed on TV Picture, which permits answers to be formulated by a TV viewer with a local re mote control unit at the receiver station site by movement of a cursor to a specified location on a menu displayed on a TV receiver screen for selection of a vote, or order, etc. to be automatically transmitted to a central analysis station. Provision is also made at the local TV receiver station with the remote control unit to effect cursor control of a menu selection, for example for selection and automatic tuning of the TV receiver to a television channel available at that location. A non-critical remote control unit shaped as a pistol with one finger joystick control of cursor position and trigger for selection makes responses simple and non-critical.

A system for processing of audience response answers at a central station is described in U.S. Patent 4,755,871 to Fernando Morales-Garza, et al., July 5, 1988. This provides for inexpensive control of time slots at the response unit station by synchronization of timing with a TV program signal incorporating an audience question.

However, these prior art systems have not been able to process answers over a wide territorial range, such as for example nationally over the fifty states of the USA, or international ly in various sovereign countries or between sovereign countries for real time instantaneous analysis of audience responses over large territorial areas.

It is therefore a general objective of this invention to provide a wireless communication system for audience polling, processing, analyzing and identifying responses, capable of feeding back verified responses for the information of the polled audiences, either together with a transmitted TV program or independently in an audience polling mode of operation instaneously and on-line.

A more specific objective of this invention is to use narrow band rf communication beeps capable of identifying responder TV stations, or the like, with time slot identification over wider territorial ranges than those of the aforesaid Patent 4,591,906, for example for nation-wide or international polling with current polled results appropriately analyzed and verified.

Another specific objective of this invention is to provide by means of satellite communications a wireless processing system for real time audience polling over long distances, wherein specific TV receiver station, or like, response units can be identified, verified and analyzed for real time processing of responses from polled audiences.

Other objects, features and advantages of the present invention will be found throughout the following description, drawings and claims.

This invention provides for the wireless transmission of on-line instantaneous audience polling and response signals over large distances by way of a satellite station.

In the event that local areas, such as cities covered by wireless TV stations or isolated TV cable systems, have an audience polling and response sub-station for deriving and processing local information as well as for communicating to other local areas or a central geographic processing center, a set of local area audience analysis repeater stations, may for example, each communicate with a family of response units operating on the beep principle of U.S. Patent 4,591,906. Questions and answers are communicated, processed and verified over local areas such as surrounding a TV transmitter site, with the capability of isolating and identifying each response unit in the audience. The repeater stations then communicate by intermediate satellite transmission channels to a central data center that receives the local signals to consolidate them into a nation-wide response result, for example. The data center also can process questions directed to the repeaters for local polling in individual time slots identifying each of the response units, which are typically TV receiver stations. Further verification, formatting, repeating and storage of answers, and real time feedback of response data to the polled audience takes place at the data center, typically a national or international processing station. Local response units are compatibly operated at the response unit site with cable systems, VCR systems and radio TV signals from local transmitters. Preferably these response units are controlled by way of wireless remote control units using infrared communication links. Frequency synthesizing equipment at the response unit sites keep the cost of response units low while accurately controlling the timing of ID time slots ans system synchronization. Travel time of radio waves is accounted for in the system to provide accurate identity of the individual response units through assigned synchronous time slots.

In the same manner the satellite station may communicate with scattered or concentrated individual TV receiver stations and a data processing center at a remote location.

The questions and answers are digitalized in local data processors for synchronous system transmission and for satellite communication purposes. They are sent on a single frequency narrow band radio transmission channel. Real time clock signals are incorporated into the system along with the questions to identify real-time responses for verification of responses that might include erroneous answers from VCR or re-broadcast signals at the response unit site.

Typically this system may be used for national or international audience polling, for weather condition polling, for price or market surveys and other financial datas processing, or for educational purposes such as grading examinations from a network of colleges or other schools, as well as for billing and accounting purposes for receipt of special programs. It is unique in that data from a plurality of local areas is assembled by way of satellite transmission channels for producing a large polling area suitable for national or international audience surveys with real time processing making possible relay of current responses to the polled audience.

Further aspects of the invention include the positioning of questions on a TV picture in the form of a menu so that a remote control unit can place a cursor on the chosen selection without interruption to the program with great operator ease and accuracy and without criticality. A hand gun shaped infrared transmitting remote control unit with a finger operated joystick and trigger used for this purpose is also integrated into the local TV station equipment as a simplified control unit affording other advantages. Thus, for example, program channel selection for locally available channels may be instituted from visual decals on a menu without channel hunting or switching, in a format not requiring language skills or lookup of local station channel numbers. The same system can be used to order from local stores and restaurants for example.

Throughout the drawings similar reference characters are used to facilitate comparison between the respective figures and system elements. In the drawings:

Figure 1 is a block system diagram of a satellite communication audience polling system embodiment of this invention;

Figure 2 is a block system diagram embodiment of this invention of a data processing center for sending audience questions and receiving audience responses from a plurality of localized systems, such as city TV station audiences, to produce nationwide audience response data, for example;

Figure 3 is a block system diagram of local area repeater station equipment embodiment of this invention to service local audience questions and responses;

Figures 4 and 5 are block diagrams of response unit embodiments afforded by this invention, typically TV receiver stations about a local TV transmitting station site provided with audience response processing equipment;

Figure 6 is a general system embodiment in block diagram form of a TV receiver station control system;

Figure 7 is a block diagram of some frequency conversion elements of an audience response unit embodiment of this invention;

Figure 8 is a waveform chart outlining operational features of a repeater station equipment embodiment of the invention;

Figure 9 is a block diagram circuit of a receiver station data processing embodiment providing for automatic channel selection by way of a remote control cursor positioning unit, and

Figure 10 is a block diagram of a receiver station control audience response system embodiment with channel selection from a picture screen menu by means of a remote control cursor control unit.

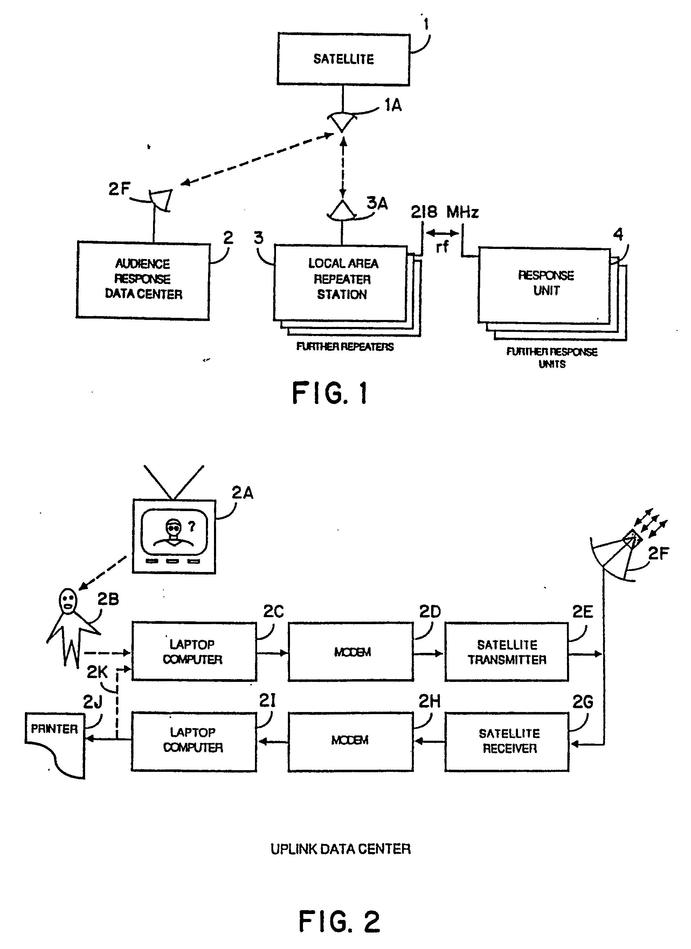

In Figure 1, the general system organization of the wide area satellite communication audience response system afforded by this embodiment is shown. The satellite station 1 through conventional communication channel links receives and repeats or retransmits data in either direction between the audience polling data center 2 and the local area repeater stations 3 by means of direction al antennas 1A, 2F and 3A respectively. The audience polling data center thus is not restricted in location and may for example be a national or international audience polling center for communication with a set of local area audience polling repeater stations 3 located typically in cellular array locations throughout the designated area covered by the data center 2.

The audience polling questions and answers are centrally transmitted and received at the data center 2 for verification, processing, formatting, storage and if desired for retransmission in real time to the audience being polled. Thus questions are transmitted from the data center to the local area repeater stations via antenna 2F to the satellite antenna 1A and then to the local station antenna 3A. These questions are preferably formulated as part of a TV picture, but may be explicitly an audience polling system separate from TV programming.

The local repeater stations, for example at one site, then locally process the questions and answers on a narrow band single frequency channel, such as 218 MHz, in the form of beeps located in timing slots explicitly identifying the various response units 4 being processed in a local family audience, for billing, identification and verification purposes. Thus, the audience response is returned in real time through satellite station 1 to the central data center 2, with processing and verification at both the local area repeater stations 3 and the data center 2, where system wide audience response data may be analyzed and formatted. The directional parabolic antennas 2F and 3A from specific locations establish a system in which widely separated local area audience response receiver stations or local area repeater stations can be coordinated and processed from a single central data center and control station.

At the data center 2, as shown in Figure 2, a question (?) that may be associated with a TV picture on the TV receiver 2A screen is converted by operator 2B or corresponding automated equipment into a synchronously timed digital signal fashioned for processing in the audience response system, such as that in the Patent 4,591,906. In a semi-automatic system as shown, the operator by way of a personal computer 2C for example programs the digital question data which via modem 2D, transmitter 2E and directional antenna 2F is communicated on a transmission link through a satellite station 1, and thus to all the response units looking at the satellite station 1 through the directional antenna 3A, thereby communicating with a plurality of repeater stations 3. The response units answer the question using a specific time slot for each one, similar to the system decribed in the U.S. Patent 4,591,906.

Similarly answers, verified at local repeater stations, are received from the satellite communication link at receiver 2G for processing through modem 2H and computer 2I for formatting and printout at printer 2J for example. The answers may also be incorporated in the TV picture signal going out for the benefit of real time monitoring by the polled audiences, as indicated by connection 2K.

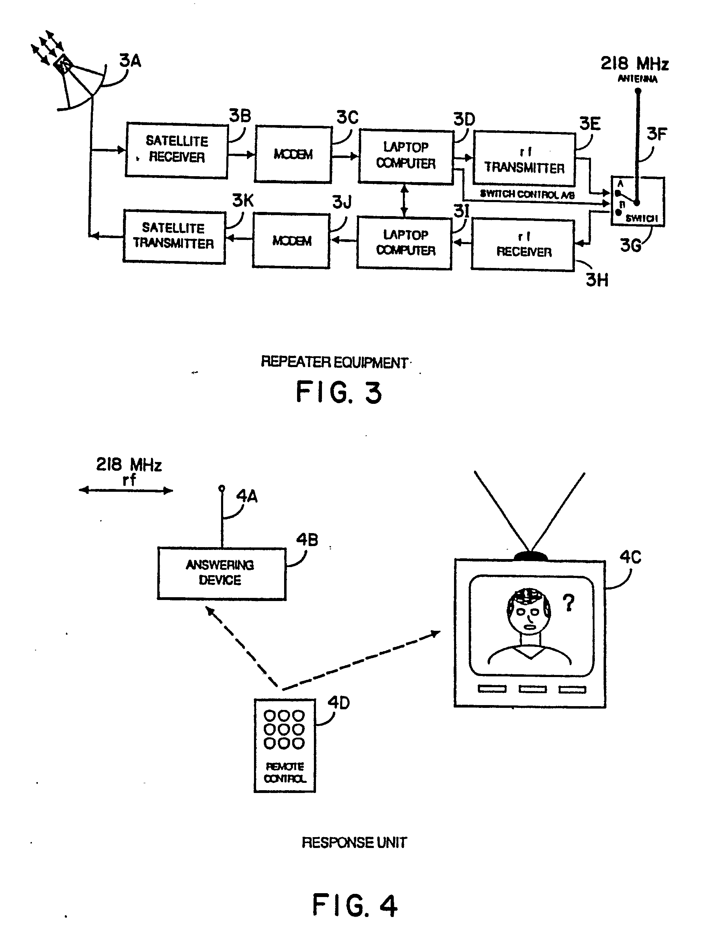

Typical local area repeater transceiving equipment is shown in Figure 3. Thus signals (questions) received from the satellite at antenna 3A are processed in receiver 3B, modem 3C, computer 3D and local rf transmitter 3E operating at 218 MHz for transmission from antenna 3F. In this transmitting mode the transmit-receive switch 3G is set to transmit position A. The reception default mode of switch 3G at B permits reception of answers at receiver 3H for verification and processing through computer 3I, modem 3J and transmitter 3K which communicates with the satellite data processing link. Summary or to talized audience response may be derived at computer 31 for example and verified. Satellite based discrimination equipment may distinguish between the transmission from various local repeater stations to prevent interference or to permit simultaneous transmissions on separate frequency bands for example. Preferably narrow band beep signals of the type disclosed previously are employed with all local repeater stations communicating on the same narrow frequency band through the satellite station. In this respect the local repeater stations all may be identified and slot time controlled in communicating to the central data station in the manner set forth in U.S. Patent 4,591,906. In particular the compensation for travel time of the signals prevents errors and greatly expands the number of individual stations that may be handled in a system literally reaching millions of subscribers, for example.

A simplified response unit is shown in Figure 4, where a remote control unit 4D synchronously operated with the TV receiver 4C may provide answers through answering device 4B, preferably that of the aforementioned copending application, to be sent to the local repeater station on the 218 MHz beep frequency channel from the response unit transmitting antenna 4A.

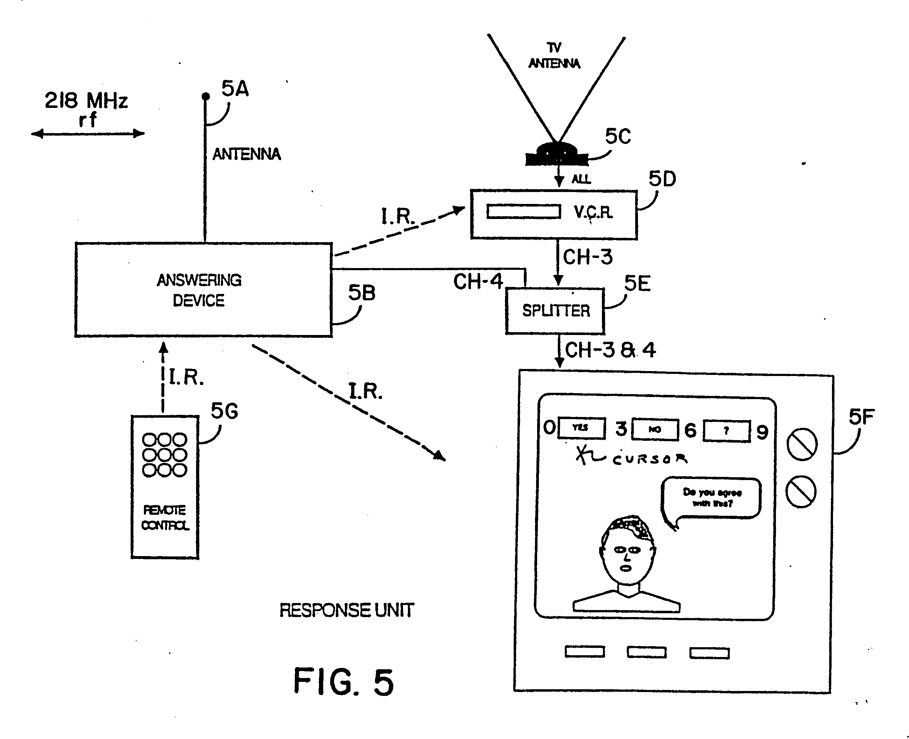

In the response unit of Figure 5, the answering device 5B may operate independently form a TV program signal format, and may isolate its own TV channel using for example the frequency of channel 4, which can be mixed with other channels in conventional splitter 5E to provide a suitable presentation on the screen of TV set 5F. Thus the system is compatible for control of cable converters, local rf broadcast signals received on antenna 5C and VCR 5D, all of which may operate conventionally on channel 3.

The responses are preferably made by IR wireless remote control unit SG which controls answering device 5B for formulating response beeps for transmission at antenna 5A on the 218 MHz beep channel to the local repeater station.

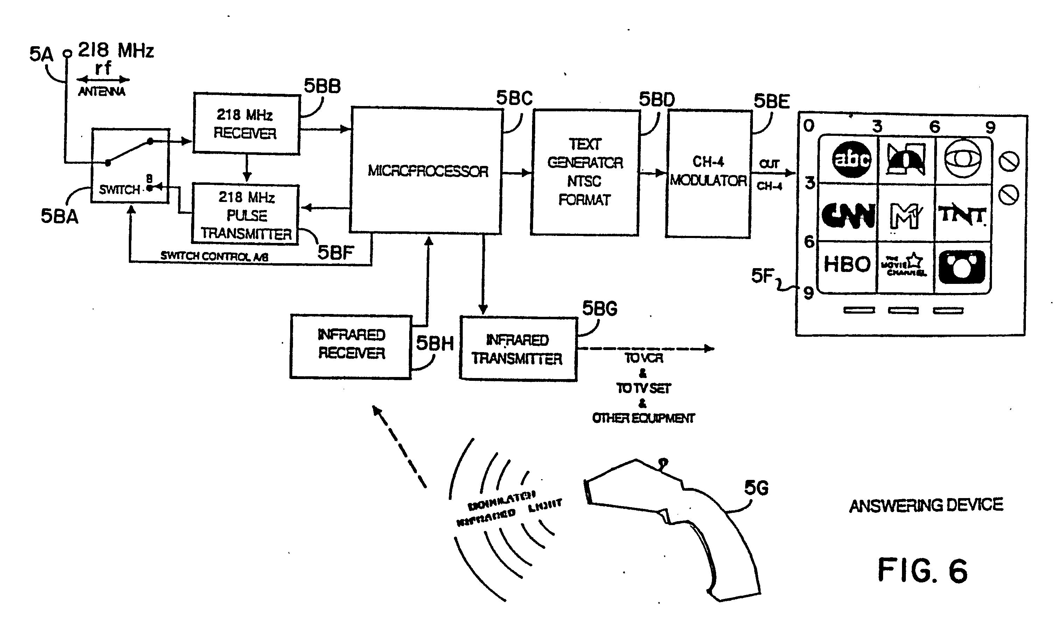

Note the format of the menu located on the screen of the TV receiver 5F, and the cursor denoted X which can be located at the proper answer by means of remote control unit 5G for audience response purposes. Thus, this invention is characterized by cursor control remote audience response units, which encourage audience participation without inconvenience or turning away from the picture. As may be seen in Figure 6, the remote control unit 5G is preferably in the pistol grip configuration, which may be generally pointed at the TV receiver unit 5BH near the screen to position the cursor at a menu choice by means of a joystick for selection by a trigger switch.

A preferred system for the audience response system at the local television subscriber stations is shown in Figure 6. The antenna 5A receives information from the local repeater station or satellite station and by way of transceiver switch 5BA selects receiver 5BB for processing incoming signals for use by microprocessor 5BC, which retains the signals in its memory. If the data comprises a real time question, the microprocessor 5BC is programmed to read the infrared receiver 5BH and relay through pulse transmitter 5BF and switch 5BA the response beeps to the repeater station for processing of audience responses to a central data response center.

For information related to TV scheduling sent to the receiver SBB or received from the infrared receiver 5BH and retained in the storage of microprocessor 5BC, the text generator 5BD and channel 4 modulator 5BE presents the viewer appropriate information and sets the equipment to accept corresponding responses from the viewer remote control unit controlled by microprocessor 5BC. The remote control device also serves by way of infrared transmitter 5BG to control channel changes in the TV set, and to control the VCR and any other IR responsive local equipment at the local subscriber station.

Note for example the menu displayed on the screen of television receiver 5F representing nine available channels by means of their indicia rather than by arbitrarily assigned channel numbers which can change from location to location, and which need to be referenced in a channel listing external to the television receiver. In this embodiment of the invention, the cursor control feature permits channel selection in the same manner as in answering questions presented on the television picture screen in a menu format. Accordingly, the channel selected by the cursor position is automatically switched in when the trigger of remote control unit 5G is actuated at the selected cursor position on the menu.

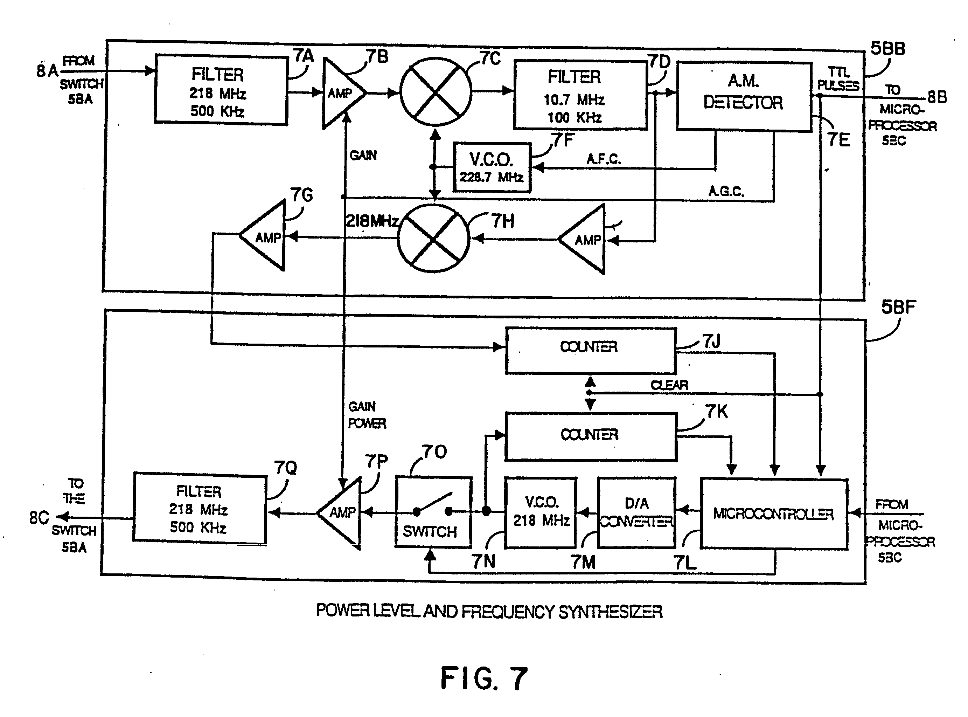

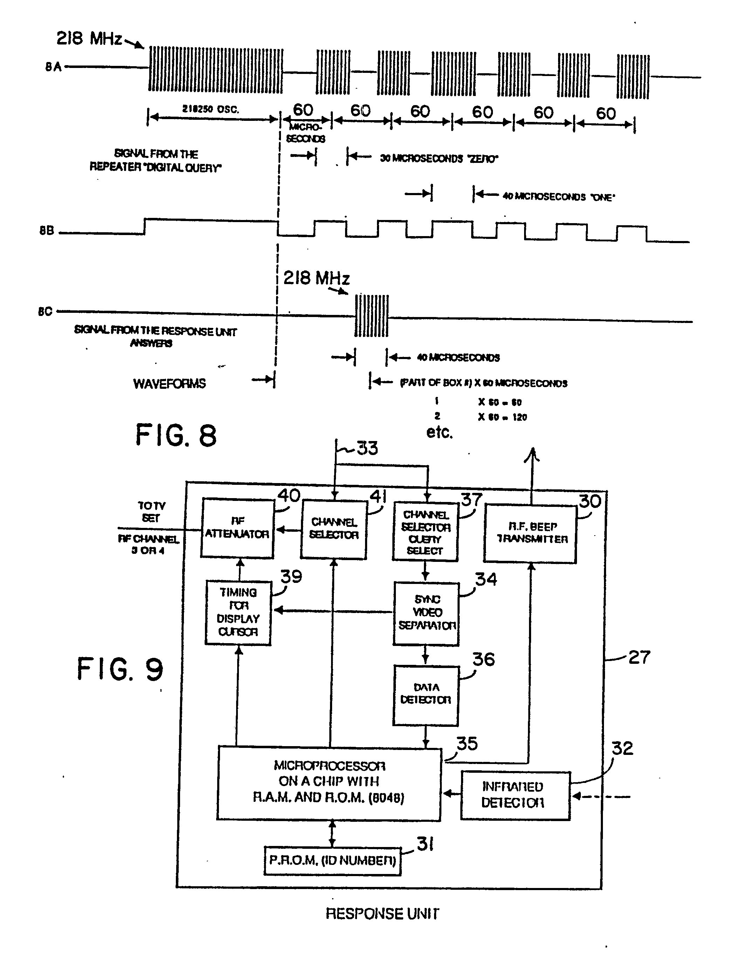

In Figure 7 details of the transmitter 5BF and receiver 5BB are provided to both control the power for different strength signals received and to control the synchronization of the pulse time slots by synthesizing the received signal as a reference frequency, in similar manner disclosed in U.S. Patent 4,755,871. As viewed with the waveforms of Figure 8, the incoming rf signal 8A from the local repeater station is processed in filter 7A to remove any interfering signals. Amplifier 7B by way of an AGC control circuit generates a standard level signal at mixer 7C. Using filter 7D and a-m detector 7E, a signal 8B is generated for use in the microprocessor 5BC.

The a-m detector 7E also generates AGC and AFC signals for gain and frequency control purposes to fine tune the voltage controlled oscillator (VCD) 7F, and to control the gain of amplifiers 7B and 7P. Thus, the locally controlled or synthesized frequency at 7F is mixed again with the signal 8A at mixer 7H and amplified at 7G for processing in counter 7J to count the number of oscillations. This counter 7J and also counter 7K are cleared every time the signal 88 returns to zero.

Counter 7K counts the oscillations from VCO 7N as an input to microcontroller 7L, which by way of digital to analog converter 7M controls the transmission frequency of VCO 7N by comparing the counts on the two counters. Only when the counts are equal can the microcontroller transmit a radio frequency pulse 8C using switch 70 and power amplifier 7P as filtered through narrow band filter 7Q. Thus the output beep pulse to the local repeater station is carefully controlled in frequency and amplitude.

The signal 8A coming from the satellite preferably contains a coded real time clock signal inserted at the data center computer with the question for verification of live real time conditions by comparing the question and answer times in a clock portion of the microprocessor 5BC at the response unit or in the computer 3I of the local repeater station.

The block diagram of Figure 9 shows in more detail the interacting features of the present invention made available by the cursor control technique feature unique in this subscriber-audience response-channel selection system provided by the invention, whether in a wireless transmission network as indicated or an equivalent wired cable network. The response unit block 27 is then a more detailed showing of the answering device of Fig. 6 as related to the radio transmission audience response system of Patent 4,591,906, supra.

Thus, the beep transmitter 30 provides output signals to the central audience response analysis center for indicating the identification of the subscriber (31) and the menu choice made by means of the I.R. detector 32 for the remote control unit that manipulates the cursor position in the manner hereinbefore described. The timing data is synchronously related to television horizontal and vertical synchronization signals 34 by suitable programming of the microprocessor 35 with incoming program signals from line 33 to which the local station is tuned (37), as provided by data detector 36.

The microprocessor by counting synchronization and clock pulses in the picture frame being viewed, for example, also times the display cursor (39), which is simply introduced visually into the picture being processed on the TV set by means of an RF attenuator 40, to produce instantaneous contrast at the cursor location timing with picture video content to make visible the cursor position no matter what the picture format. The generic channel selection feature of Figure 6 is achieved by the microprocessor 35 in conjunction with channel selection means 41 in accordance with known technology after the decoding and code conversion of the pictorial indicia selected into the cable or network channel number.

Thus, this invention has provided a method of selecting channels to which a television set at a local station in an audience response network is tuned to a program channel by providing on the television receiver screen as pictorial multichoice menu of non-numerical video emblems designating each of a plurality of channel selections available (Fig. 6), and moving a cursor about the screen to one of the menu choices to identify a channel selection with a manually operated remote control instrument to automatically tune in the selected channel. Audience response to moving a cursor over a television set screen menu position to one of a multiplicity of choices illustrated.

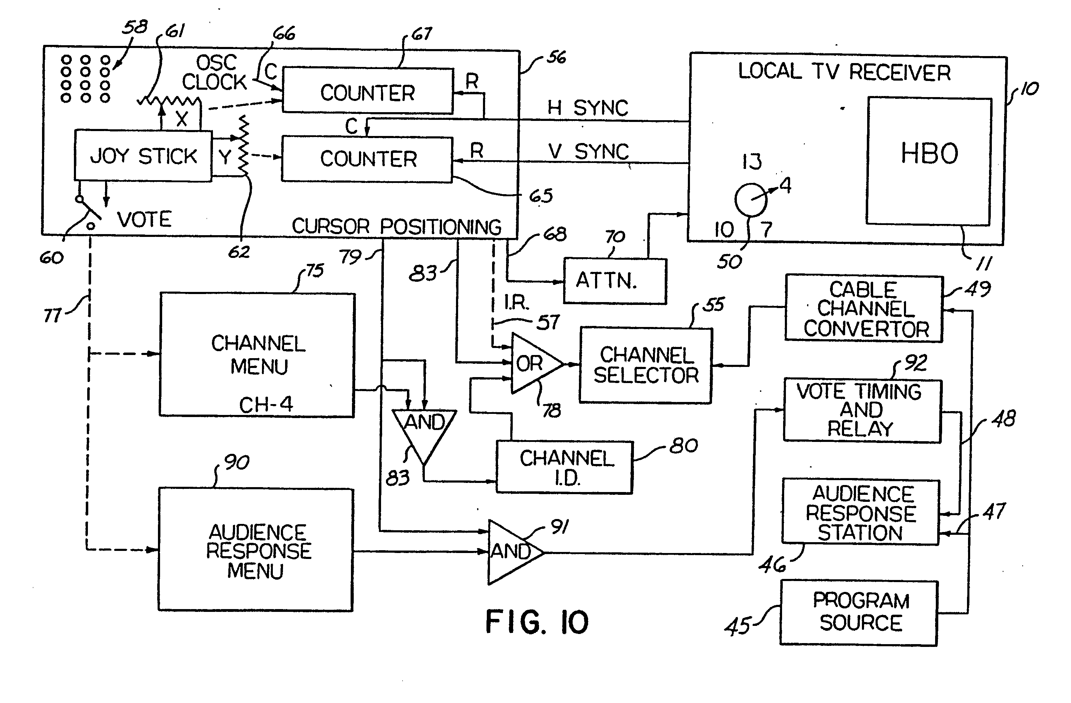

Network system interaction with the local television station system is illustrated in the block diagram representation of Figure 10, wherein program channels are controlled by a network program channel source 45 such as a cable or wireless subscription system, a satellite source or equivalent multiple station broadcast network about a particular locality. An audience response processing facility 46 either associated with the network system or independent is coupled to the program sources at 47 for timing and synchronization of audience response signals, and to audience response signal sources at 48 for receiving votes and those subscription channel tuning signals or menu based purchase orders requiring subscriber order confirmation derived from the cursor-menu selection process afforded by this invention. Various data processing functions are available, so that channel tuning habits, direct answers to inquiries and the like may be analyzed and reported and so that committments for subscriptions or purchases may be billed, etc. The remaining features, unless in part relayed by intermediate stations, may be part of a subscriber's local television receiver system, including the cable converter 49 if necessary to convert a designated number of channels to the television set frequency of channel 3 for example, as selected by channel selector 55.

The conventional channel converter 50 on the TV receiver 10 for U.S. standards tunes to channels 2 to 12 and can be set on channels 3 or 4 for the purposes of this invention to control the programs available at local channel selector means 55 under direction of the manually operable remote control unit 56 in the manner well known in subscription type cable systems and the like, as indicated by the dotted I.R. line 57. Thus the button set 58 may be used conventionally to control the channel selection by numeric channel identification for the choices available on the network if desired to supplement the cursor-menu channel selection feature afforded by this invention. Also the remote control unit 56 by way of buttons 5B may control peripheral units such as VCR units in the conventional manner now well known in the art.

However, in accordance with this invention, the remote control unit 56 is provided with means for creating and positioning a cursor on the television set screen 11 and for making a menu choice or vote at a cursor location. Preferably the control means is a joystick unit, well known in the video game arts for cursor forming, movement and a game action choice such as shooting down a missile by a "trigger" switch when "sighted" by cursor position with the preferred pistol grip embodiment of Fig. 6. Thus, a voting switch 60 is provided as well as X dimension analog control means 61 and Y dimension analog control means that under joystick control moves the cursor about the television set screen 11. Such controls are conventionally controlled by such means as the horizontal sync pulse counter 65, reset each frame by the vertical sync pulse of the television receiver 10, which responds to the analog controller 62 to set a count for timing the cursor position vertically. Similarly a clock pulse train from an oscillator 66 may with horizontal counter 67, reset by horizontal sync pulses, establish a timing position horizontally in the television picture on the screen 11. Thus an output pulse is timed to place the cursor at the appropriate TV picture raster position as indicated at lead 68. In accordance wih this invention, that pulse simply attenuates the signals forming the video presentation on the TV screen 11 to make visible the cursor (Fig. 9). Thus attenuator 70 is inserted into the signal feed line 71 to the receiver 10, whether rf or video.

Further in accordance with this invention, the remote control unit 56 can invoke a channel selection menu mode of operation as set forth in Fig. 6, represented here by block 75. This processes the vote at lead 77 when the cursor time is known at lead 68 thereby provid ing with an appropriate code conversion the selected channel at 55 directly in response to the vote and without manipulation of channel selector 50 or the remote control buttons 58. As hereinbefore explained, thus channel selection is made from a generic pictorial menu on screen 11 without any reference to or need to look up numerical channels in the subsoriber system network. Thus, "AND" circuit 83 in the presence of a vote and a coordinate code for the cursor position at lead 79 will decode the local channel menu at identification means 80 to operate channel selector 55. The "OR" circuit 81 permits channel selection either by the numerical designation route conventional with the remote control unit 56 via lead 83 or by the menu route afforded by this invention. The channel availability menu (Fig. 6) may be presented on the screen 11 by default when the set is turned on.

Furthermore the cursor position control feature of this invention provides for audience response voting to multiple choice queries contained in menu format on program materials being viewed on screen 11, as set forth in Fig. 5, as generally represented by block 90, which converts the vote at 77 with the cursor coordinate timing at 79 to audience response signals at 48, by way of "AND" circuit 91 and the answer timing and transmission system 92, preferably a system such as set out in U.S. Patent 4,591,906, supra for wireless transmission to an audience response station 46 · within television signal communication distances. However, in the case of either wired or wireless subscription cable systems and equivalents there are other systems now well known for relaying audience responses to processing centers.

It is therefore evident that this invention advances the state of the art and provides a simple operative audience response communication system that can operate in real time nationally or internationally through satellite communication channels that gather signals from a set of local audience response processing and repeater stations for consolidation in a central data processing center. Therefore the features of novelty believed descriptive of the spirit and scope of the invention are defined with particularity in the following claims.

## Claims

1. An audience response communication system having a plurality of local area audience response stations with an audience response television receiver station coupled into an audience response processing system for sending inquiries to television receivers at the audience response stations and a data processing center for processing responses returned from the local audience response stations in answer to said inquiries, characterized in that a satellite station processes audience response communications between the local audience response stations and the data processing center.

2. The audience response system defined in Claim 1 further characterized in that the system processes a plurality of local areas by means of a central polling studio connected via the satellite station to the local areas.

3. The audience response system defined in Claim 1 further characterized in that said inquiries are transmitted on a television picture to identify at least one answer position located on a television picture screen, and the television receivers are provided with remote control means for audience response by moving a cursor position on the television picture screen to an answer position and transmitting an answer comprising the location of the cursor position.

4. The audience response system defined in Claim 3 further characterized in that the remote control means for moving the cursor position comprises a hand gun shaped instrument with a joystick control operable by one finger to move the cursor and with a trigger operable to transmit an answer.

5. The audience response system defined in Claim 3 further characterized in that the remote control means comprises a selection system for presenting multiple choice menus on the television picture screen and registering a choice from the menus by means of the location of the cursor position with the remote control unit.

6. The audience response system defined in Claim 5 further characterized in that said selection system comprises means for presenting a menu representing a selection of television channels available to the television receiver, and means for automatically tuning in a television station identified by a cursor position on the television channel menu.

7. The audience response system defined in Claim 3 further characterized in that means is provided for timing the cursor position within the television picture format and visibly presenting the cursor by momentary attenuation of the video signal formulating a television picture.

8. The audience response system defined in Claim 1 further characterized by:
a plurality of local area audience response stations each communicating with a family of response units in the local area of the respective response stations to process audience response questions and answers,

a remotely located central audience response processing station for communicating with the said plurality of audience response stations to provide audience response data from a plurality of local areas by means of said satellite station via means providing communication channels employing the satellite for sending question signals from the central audience response processing station to the local audience response stations and receiving audience response signals derived from the local area response stations and transmitted to the central processing station.

9. The system defined in Claim 1 further characterized in that said satellite station further comprises two way communication means for processing audience questions from the data processing station to the local stations and audience responses from the audience response stations to the central station on a single satellite communication channel.

10. The system defined in Claim 9 further characterized in that said satellite communicaition means comprises digital processing means and the questions and answers comprise digital signals.

11. The system defined in Claim 1 further characterized in that said audience response inquiries are transmitted on menus accompanying a TV picture, and audience response units at the television receiver stations make a menu selection to register a vote.

12. The system defined in Claim 1 further characterized in that said local audience response stations comprise a plurality of local area data centers processing responses from a plurality of audience response receiver stations via multiplexed radio transmission and reception with the data processing center at a location for processing the local area response stations.

13. The system defined in Claim 12 further characterized in that said local data centers all transmit to the satellite station on a single frequency band.

14. The system defined in Claim 12 further characterized in that each of the local area data centers is identified by a synchronously located transmission time slot for transmitting beeps of said single frequency to the central station.

15. The system defined in Claim 14 further characterized in that the plurality of local data centers communicate to their respective family of local audience response stations on a narrow frequency band channel for transmitting rf beeps of a controlled single frequency as digital information between the local area data centers and their respective families of local audience response stations.

16. The system defined in Claim 1 further characterized in that parabolic directional antennas are provided at the central data processing center and the plurality of local audience response stations directed at the satellite for communication on a specified satellite communication channel frequency.

17. The system defined in Claim 1 further characterized by means at the central data processing center for transmitting inquiry menus on a television picture frame to all the local area stations and for receiving responses from all the local area stations with real-time responses synchronized with television picture menu locations to produce instantaneous audience response surveys.

18. The system defined in Claim 1 further characterized by means to retransmit current processed audience response results back to an audience being polled over said communication channels.

19. The system defined in Claim 1 further characterized by local area audience response stations with local computer means for processing and verification of audience response signals presented on live television pictures.

20. The system defined in Claim 1 further characterized by local area audience response stations having text generator format means for producing menu text formats on the television receiver picture screen and means for selection on menu options by way of positioning a cursor on a selected menu position.

21. The system defined in Claim 1 further characterized by a plurality of local area audience response stations communicating responses through said satellite communication channels by means of beep digital signals of a single frequency timed in time slots for identifying each of the local area stations.

22. The system defined in Claim 21 further characterized by means for compensating for travel time of signal transmissions of said time slots in the audience response communications system.

23. The system of Claim 1 further characterized by means located in the local area of the local audience response stations for generating a TV picture format for presentation at local audience response stations on a TV receiver picture screen incorporating therein to an inquiry to be answered.

24. The system of Claim 1 further characterized by means in the local audience response stations for deriving response unit timing control signals from received TV picture programs incorporating a multiple choice selection menu.

25. The system of Claim 1 further characterized by means for processing questions and answers at the local area audience response stations between said response units and said data processing center as digital beep pulses, means for receiving and transmitting said pulses and gain control means for standardizing pulse amplitudes received by and transmitted from the response units.

26. The system of Claim 1 further characterized by a transmitter in the local audience response stations for transmitting a beep at a predetermined frequency, and means for adjusting output frequency of the transmitter in the response unit by counting the received frequency in a predetermied period of time and comparing with the transmitter output frequency.

27. The system of Claim 1 further characterized by a network of local area audience response stations coupled together to communicate with a central data processing center by means of a satellite communication system for real time bidirectional audience response analysis.

FIG. 1

UPLINK DATA CENTER

FIG. 2

3A

218 MHz
ANTENNA

3B  3C  3D  3E  3F

| SATELLITE RECEIVER | MODEM | LAPTOP COMPUTER | rf TRANSMITTER |

SWITCH CONTROL A/B

A
n
SWITCH

3K  3J  3I

| SATELLITE TRANSMITTER | MODEM | LAPTOP COMPUTER | rf RECEIVER |

3G

3H

REPEATER EQUIPMENT

FIG. 3

218 MHz
rf

4A

4B

ANSWERING DEVICE

4C

4D

REMOTE CONTROL

RESPONSE UNIT

FIG. 4

218 MHz
rf

5A

ANTENNA

TV
ANTENNA

5C

ALL

5D

I.R.

V.C.R.

ANSWERING
DEVICE

5B

CH-4

CH-3

SPLITTER

5E

CH-3 & 4

I.R.

I.R.

5G

5F

0  YES  3  NO  6  ?  9

CURSOR

Do you agree
with this?

REMOTE
CONTROL

RESPONSE UNIT

FIG. 5

EP 0 402 809 A2

FIG. 6

ANSWERING DEVICE

POWER LEVEL AND FREQUENCY SYNTHESIZER

FIG. 7

EP 0 402 809 A2

FIG. 8

FIG. 9

RESPONSE UNIT

**FIG. 10**